# FASCICULE DE BREVET EUROPEEN

(11) **EP 3 619 035 B1**
(45) Date de publication et mention de la délivrance du brevet: **27.01.2021**
(21) Numéro de dépôt: 18730431.6
(22) Date de dépôt: 30.04.2018
(51) Int. Cl.: B32B 1/08, B32B 7/02, B32B 15/04, B32B 15/08, B32B 15/20, B32B 27/08, B32B 27/30, B32B 27/32, B32B 3/02, B32B 3/08, B65D 65/40

(54) **STRUCTURE MULTICOUCHE DE TUBE PLASTIQUE**
MEHRSCHICHTIGE KUNSTSTOFFROHRSTRUKTUR
MULTILAYER PLASTIC TUBE STRUCTURE

(30) Priorité: 03.05.2017 WO PCT/IB2017/052563
(43) Date de publication de la demande: 11.03.2020
(73) Titulaire: Aisapack Holding SA, 1896 Vouvry (CH)
(72) Inventeur: THOMASSET, Jacques, 74500 Neuvecelle (FR); MATHIEU, Stéphane, 74500 Publier (FR); TORNAY, Régine, 1938 Champex-Lac (CH)
(74) Mandataire: Grosfillier, Philippe
(86) Numéro de dépôt international: PCT/IB2018/052979
(87) Numéro de publication internationale: WO 2018/203210

(56) Documents cités:
- US-A1- 2009 176 044
- US-A1- 2015 336 726

## Description

### Domaine de l'invention

L'invention se situe dans le domaine des tubes d'emballage flexibles pour produits liquides ou visqueux. Elle concerne plus précisément des tubes flexibles étiquetés sans soudure qui présentent un comportement élastique, c'est-à-dire qui recouvrent leur forme initiale après déformation.

### Etat de la technique

Les tubes en plastique mince et flexible sont utilisés pour une variété d'emballages différents, tels que des articles d'hygiène, des cosmétiques et des produits alimentaires. Le contenu de ces tubes peut, par conséquent, être, par exemple, du gel coiffant, du dentifrice, du shampooing, de la lotion ou du savon liquide. Pour les articles d'hygiène et les cosmétiques, il est important que le tube soit attrayant et décoratif, par exemple sur l'étagère du magasin ou sur une étagère de salle de bains. Il est également important que les informations sur les produits imprimées sur l'emballage soient transmises d'une manière claire et facilement compréhensible à un acheteur ou à un utilisateur du produit emballé. Pour ces raisons, les tubes sont généralement fournis avec une impression directe ou un film qui peut être imprimé avec le motif et le texte souhaités.

Il existe des tubes dont la jupe en polyéthylène est extrudée ou coextrudée. Une tête de tube est ensuite assemblée à la jupe par surmoulage ou soudage puis le tube obtenu est finalement imprimé et décoré. Ces tubes sont largement utilisés pour la réalisation de tubes cosmétiques ou pharmaceutiques car ils présentent une résistance au stress cracking adaptée à la conservation de formules sensibles, et présentent des qualités esthétiques adaptées aux exigences de ce marché. Cependant, ces emballages présentent deux inconvénients importants. Le premier inconvénient réside dans la décoration des corps tubulaires qui nécessite des équipements sophistiqués et engendre un surcoût important. Le second inconvénient est lié au choix limité des matériaux qui peuvent être utilisés pour former la structure monocouche ou multicouche par extrusion ou co-extrusion. Cela conduit à des limites de l'emballage pour certaines propriétés comme par exemple l'élasticité du corps tubulaire qui permet à l'emballage de recouvrer sa forme après déformation.

Il existe des tubes en plastique à paroi mince préalablement extrudés puis étiquetés ultérieurement. Ces tubes nécessitent des étiquettes qui sont collées sur le tube à température ambiante. Les matériaux d'étiquette appropriés pour une application ultérieure ne sont pas soudables, ce qui signifie qu'il faut s'assurer qu'ils ne s'étendent pas dans la fermeture d'extrémité du tube, qui est une soudure thermique. Les matériaux d'étiquette sont en outre relativement rigides, ce qui rend nécessaire que l'étiquette se termine un peu au-dessous du bord entre le corps du tube et l'épaule du tube. Une étiquette de tube classique, appliquée ultérieurement qui s'étend trop près de la transition entre le corps du tube et l'épaulement du tube, peut autrement s'avancer de la paroi du tube ou former un bord plissé. Ce phénomène doit évidemment être évité car il donne au tube une apparence peu attrayante.

L'une des façons d'appliquer des étiquettes aux tubes est par ce qu'on appelle « l'étiquetage dans le moule », IML, c'est-à-dire en surmoulant une étiquette préalablement déposée dans un moule d'injection. Les tubes IML offrent un certain nombre d'avantages notamment en ce qui concerne l'apparence du récipient fini. Par exemple, il est possible de produire une surface d'étiquette brillante ou mate qui peut avoir pour effet de donner au récipient une apparence élégante. L'inconvénient des tubes IML, est lié au fait qu'ils doivent être injectés à partir de résines ou mélanges de résine spécifiques pour le moulage par injection d'un article à paroi mince. De ce fait, certaines propriétés de l'emballage sont diminuées, en particulier la résistance au stress cracking ainsi que la flexibilité de la résine injectée.

### Exposé général de l'invention

L'invention est définie par les revendications.

L'invention permet de remédier aux inconvénients précités en offrant un tube étiqueté présentant les avantages du tube extrudé et du tube IML et dépourvu de leurs inconvénients.

En outre, l'invention permet d'obtenir des propriétés d'élasticité étonnamment améliorées par rapport à un tube extrudé.

Dans un mode d'exécution, l'invention concerne une jupe multicouche de tube flexible comprenant une couche principale extrudée et un film mono- ou multicouche entourant au moins partiellement la couche principale. Le module en traction de la couche principale est inférieur à 1200 N/mm² et le module en traction du film est supérieur à 3500 N/mm².

Dans un mode d'exécution, le module en traction de la couche principale est de préférence inférieur à 500 N/mm².

Dans un mode d'exécution, le film comprend deux couches dont l'une au moins présente un module en traction supérieur à 3500 N/mm². Dans un mode d'exécution, l'autre desdites deux couches du film présente un module en traction supérieur à 100 N/mm².

Dans un mode d'exécution, l'épaisseur de la couche principale peut représenter entre 80 et 97 % de l'épaisseur de la jupe.

Dans un mode d'exécution, l'épaisseur de la couche principale peut être comprise entre 190 et 680 microns.

Dans un mode d'exécution, l'épaisseur de la couche principale peut être comprise entre 250 et 550 microns.

Dans un mode d'exécution, l'épaisseur de la jupe peut être comprise entre 200 et 700 microns et de préférence entre 300 et 600 microns.

Dans un mode d'exécution, la couche principale peut être composée comme suit :

| | |
|---|---|
| 45% HDPE Hostalen GF 4750 | MFR : 0.4g/10min |
| 45% LDPE ExxonMobil 165 | MFR : 0.33g/10min |
| 10% LLDPE Dowlex 2045 G | MFR : 1g/10min |

Dans un mode d'exécution, la couche principale peut être composée comme suit :

| | |
|---|---|
| 80 % LDPE ExxonMobil 165 | MFR : 0.33g/10min |
| 20% LLDPE Dowlex 2045 G | MFR : 1g/10min |

Dans un mode d'exécution, la jupe peut présenter un rapport d'énergie absorbée supérieur à 60% et de préférence supérieur 80 %.

Dans un mode d'exécution, les extrémités du film peuvent être placées bout-à-bout.

Dans un mode d'exécution, les extrémités du film peuvent avoir un espace entre elles.

Dans un mode d'exécution, les extrémités du film peuvent avoir un recouvrement.

Dans un mode d'exécution, une bande peut être ajoutée sur les extrémités du film.

Dans un mode d'exécution, la bande peut être placée entre la couche principale et le film ou sur le film.

Dans un mode d'exécution, la couche principale peut être multicouche et coextrudée.

Dans un mode d'exécution, la couche principale peut comprendre une couche barrière à l'oxygène.

Dans un mode d'exécution, la couche barrière peut être une couche comprenant une résine EVOH par exemple.

Dans un mode d'exécution, la couche principale peut comprendre une couche de matière(s) recyclée(s).

Dans un mode d'exécution, le film peut comprendre une structure multicouche.

Dans un mode d'exécution, le film peut comprendre une couche barrière à l'oxygène.

Dans un mode d'exécution, la couche barrière peut être une couche de résine EVOH et/ou une couche métallisée et/ou une couche de métal.

Dans un mode d'exécution, la couche de métal peut être une couche comprenant de l'aluminium.

Dans un mode d'exécution, l'invention concerne un produit comprenant au moins une jupe telle que définie dans la présente demande. Le produit peut être un tube ou un autre emballage, ou un autre objet.

### Définition des termes utilisés dans l'exposé de l'invention

Dans l'exposé de l'invention les termes et abréviations suivants sont utilisés :
Film multicouche : film comportant plusieurs couches. Le film multicouche peut être obtenu par coextrusion ou/et complexage.
PET : polyéthylène téréphtalate bi orienté
BOPP : polypropylène bi orienté
PA : polyamide
PE : polyéthylène
LDPE : polyéthylène basse densité
LLDPE : polyéthylène basse densité linéaire
HDPE : polyéthylène haute densité
EVOH : éthylène alcool vinylique
Adhésif : colle utilisée pour associer plusieurs couches par complexage

### Description détaillée de l'invention

L'invention sera mieux comprise par la description de modes d'exécution non-limitatifs de celle-ci et des figures annexées dans lesquelles

Les figures 1 et 2a à 2d illustrent des modes d'exécution en coupe de jupes selon l'invention;

La figure 3 illustre un tube comme exemple d'application de la présente invention;

La figure 4 illustre une vue de face d'un échantillon de jupe cylindrique soumis à une déformation;

La figure 5 illustre une vue en coupe selon l'axe A-A de l'échantillon de la figure 3;

La figure 6 illustre un exemple de la déformation de l'échantillon lors d'une phase de chargement et de déchargement;

La figure 7 illustre l'énergie de déformation nécessaire pour réaliser la déformation de l'échantillon lors d'une phase de chargement et de déchargement;

La figure 8 illustre l'énergie absorbée lors d'une phase de chargement et de déchargement;

La figure 9 illustre deux cycles de déformation d'un échantillon.

L'invention porte notamment sur la partie flexible du tube appelée jupe dans l'exposé de l'invention qui suit.

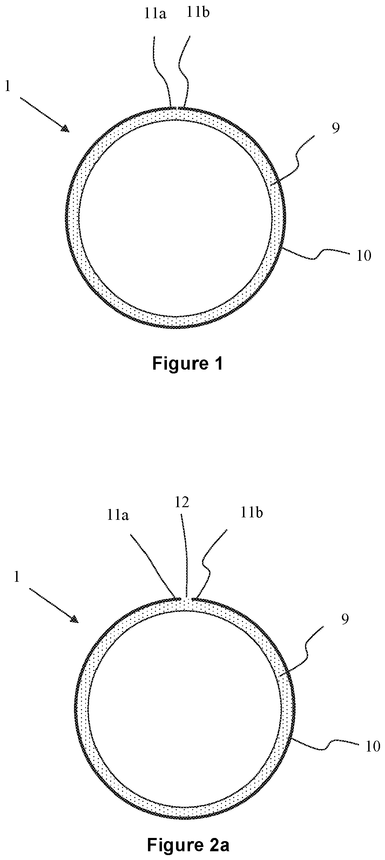

L'invention concerne plus précisément une jupe 1 multicouche de tube flexible 18 telle que définie dans les revendications et illustrées notamment dans les figures 1, 2a à 2d qui seront détaillées ci-après.

Pour former un tube 18, la jupe 1 est reliée à sa première extrémité à une tête de tube comportant un goulot 15, et est soudée à plat à sa seconde extrémité 17 afin de fermer l'emballage de façon étanche. La tête de tube peut comporter également un bouchon 16 dépendant ou indépendant pour fermer et ouvrir l'emballage.

La jupe 1 selon l'invention présente conjointement une élasticité élevée, une grande résistance au stress cracking, ainsi qu'une barrière élevée à la vapeur d'eau ou à l'oxygène.

L'épaisseur de la jupe 1 est de préférence comprise entre 200 et 700 microns et en particulier entre 300 et 600 microns.

Selon l'invention, la jupe multicouche comprend une couche principale tubulaire 9 extrudée formant de préférence entre 80 et 97% de l'épaisseur totale. La couche principale 9 forme de préférence la couche interne de la jupe 1 qui se trouve en contact avec le produit emballé. Cette couche 9 ne présente pas de discontinuité de propriété dans la direction circonférentielle car elle résulte de l'extrusion directe d'un corps tubulaire. L'homogénéité des propriétés de la couche principale 9 sur sa circonférence, en particulier l'absence de zone de soudure selon la direction axiale de l'emballage permet d'éviter les zones de fragilités au stress cracking le long des soudures. L'épaisseur de couche principale 9 est avantageusement comprise entre 190 et 680 microns et de préférence entre 250 et 550 microns. D'autres dimension sont bien entendu possibles en fonction des circonstances.

La couche principale 9 est avantageusement formée d'une résine ou d'un mélange de résine particulièrement résistante au stress cracking du fait de leur masse molaire élevée. Le MFR (190°C, 2,16kg, mesuré selon la norme ISO 1133) de la résine ou du mélange de résine formant la couche principale est inférieur à 4 et de préférence inférieur à 1.

### Exemple 1 pour la couche principale :

| | |
|---|---|
| • 45% HDPE Hostalen GF 4750 | MFR : 0.4g/10min |
| • 45% de LDPE ExxonMobil 165 | MFR : 0.33g/10min |
| • 10% LLDPE Dowlex 2045 G | MFR : 1g/10min |

### Exemple 2 pour la couche principale :

| | |
|---|---|
| • 80 % LDPE ExxonMobil 165 | MFR : 0.33g/10min |
| • 20% LLDPE Dowlex 2045 G | MFR : 0.7g/10min |

Selon un mode de réalisation de l'invention, la couche principale 9 extrudée forme une structure multicouche obtenue par co-extrusion. Par exemple, ladite couche principale 9 extrudée comporte une ou plusieurs couches de polyéthylène et une couche barrière à l'oxygène et des couches de liant de faible épaisseur. De préférence, l'épaisseur de la couche barrière ne représente pas plus de 10% de l'épaisseur de la couche principale, 9 et de préférence son épaisseur est inférieure à 7% de l'épaisseur de ladite couche principale 9. La couche barrière est par exemple une couche d'EVOH.

Ladite couche principale 9 peut également contenir une ou plusieurs couches de résines recyclées. Pour des raisons de compatibilité alimentaire, il est généralement recommandé d'éviter que les couches recyclées forment la couche interne de l'emballage et se trouvent en contact avec le produit emballé.

La couche principale 9 est recouverte au moins partiellement par un film 10 décoré formant la face visible de la jupe 1. L'épaisseur du film décoré 10 est comprise entre 10 et 120 microns et de préférence entre 30 et 80 microns. D'autres dimensions sont bien entendu possibles. De préférence, le film décoré 10 recouvre toute la surface de la jupe 1 et ses extrémités 11a/11b sont ajustées bout à bout. Dans une variante, les extrémités 11a/11b du film 10 sont reliées par soudage. D'autres variantes sont décrites dans la présente demande.

Le film décoré 10 comprend de préférence au moins deux couches appelées couche interne et couche externe dans la présente demande. La couche externe a une contrainte à la rupture en traction supérieure à 100N/mm2 et de préférence supérieure à 150N/mm2 et conjointement une température de fusion supérieure à 175°C et de préférence supérieure à 200°C. Les caractéristiques de la couche externe du film 10 contribuent au comportement élastique de la jupe 1, mais contribuent également à la stabilité du film décoré 10 lors de l'assemblage sur la couche principale extrudée 9. L'épaisseur de la couche externe du film 10 est comprise entre 10 et 80 microns et de préférence entre 10 et 30 microns.

Le film décoré 10 comporte la couche interne située entre la couche principale 9 et la couche externe du film 10 et assure le soudage du film 10 sur la couche principale 9 extrudée. La résine ou le mélange de résine dont est composée la couche interne du film 10 permet une adhésion par fusion de l'interface de la couche interne du film 10 sous l'effet de la chaleur apportée la couche principale 9 à l'état fondu. La couche interne du film 10 est préférablement composée d'un polyéthylène de basse densité ayant une température de fusion inférieure à 120°C et de préférence inférieure à 110°C. La couche interne du film 10 a une épaisseur comprise entre 5 et 50 microns et de préférence entre 15 et 30 microns.

Le rapport des modules de rigidité (ISO 527-1) des matériaux composant la couche externe du film 10 et la couche principale 9 est supérieur à 3 et de préférence supérieur à 7. Il a été observé que le rapport de rigidité permettait d'améliorer de façon inattendue l'élasticité de la jupe 1 sans modifier de façon importante la sensation de rigidité de l'emballage.

L'invention offre plusieurs avantages en ce qui concerne l'apparence du récipient fini. Par exemple, il est possible de produire une surface de jupe 1 brillante ou mate en modifiant le choix du film 10. Par exemple afin d'obtenir une surface mate de la jupe 1, une couche supplémentaire en polyéthylène ou polypropylène sera ajoutée pour former la surface externe du film 10 et de la jupe 1. L'invention permet d'obtenir une décoration complète de la jupe du tube. Selon un mode de réalisation de l'invention, le film 10 s'étend autour de l'ensemble du corps du tube dans la direction radiale. En sélectionnant un film ayant la résistance à la traction et les propriétés thermiques appropriées, il est possible d'appliquer le film de sorte qu'il entoure complètement le tube dans la direction radiale sans laisser d'espace entre les bords du film ou de sorte que les bords du film se chevauchent. Il est ainsi possible de produire un motif continu ou un texte ininterrompu qui s'étend radialement autour du corps du tube, sans une jointure visible entre les bords du film décoré 10.

Il peut également être approprié pour le film de couvrir l'ensemble du corps du tube dans la direction axiale, c'est-à-dire du bord de l'épaulement à la fermeture de l'extrémité. Le film décoré 10 peut être utilisée pour couvrir tout le corps du tube, ce qui n'a pas été possible avec la technique d'étiquetage précédemment utilisée pour les tubes en plastique extrudés. L'invention permet par conséquent d'améliorer la décoration et l'esthétique de ces tubes.

Conformément à l'invention, il est possible d'étendre le film 10 dans la direction axiale du tube jusqu'à la fermeture d'extrémité sur le corps du tube. Cela signifie qu'il est possible d'obtenir une couverture complète du corps du tube avec le film décoré 10 même lorsque la fermeture à l'extrémité du corps du tube a une forme incurvée non linéaire ou une forme angulaire. Avec les étiquettes appliquées ultérieurement, l'adaptation de la forme à une fermeture d'extrémité non linéaire nécessite un degré de synchronisation qui, en pratique, rend impossible l'étiquetage. Des fermetures d'extrémités non linéaires sont utilisées pour des raisons décoratives et pour donner au tube un aspect conçu, ce qui peut être souhaitable dans l'emballage de produits cosmétiques ou analogue. Une fermeture d'extrémité non linéaire peut également avantageusement être utilisée pour former une partie plus large soudée dans laquelle une ouverture ou un crochet peut être agencé, qui sert de moyen de suspension pour le tube, sur une étagère ou dans une salle de bain, par exemple.

Un autre avantage de l'application du film décoré 10 pendant le procédé d'extrusion résulte du fait que dans la direction axiale la tranche du film décoré est absente de la transition entre la tête de tube et le corps de tube. La transition entre la tête de tube et la jupe 1 forme une surface lisse contrairement aux tubes étiquetés après extrusion. En outre, la jupe 1 ayant en surface le film 10 décoré peut couvrir la partie de la tête de tube reliant la partie cylindrique à la partie conique de la tête. Une partie également conique de la tête de tube peut être également couverte sans que se forme de plis ou défauts esthétiques liés au film ou à la décoration.

Le tube selon l'invention présente une excellente barrière à la vapeur d'eau ainsi qu'à l'oxygène. La barrière à la vapeur d'eau la jupe est inférieure à 0.1 et de préférence à 0,05 g/jupe/jour/100%H2O. La jupe présente également une perméabilité à l'oxygène inférieure à 4 cm3/jupe/jour/bar et de préférence inférieure à 0.05. Avantageusement la barrière à l'oxygène est apportée par le film. De nombreuses solutions existent pour apporter des propriétés barrière à l'oxygène. Le film peut contenir par exemple une couche de PET biorienté éventuellement métallisée ou avec un revêtement SiOx. D'autres couches barrière comme des couches d'EVOH, PA, PVDC, aluminium largement utilisées dans le domaine de l'emballage peuvent être utilisées également.

Dans une variante, le film 10 peut être formé d'une structure comprenant une couche barrière métallique, par exemple en aluminium. Le film peut par exemple être la structure suivante: PET/Alu/PE. Des variantes équivalentes sont bien entendu possibles.

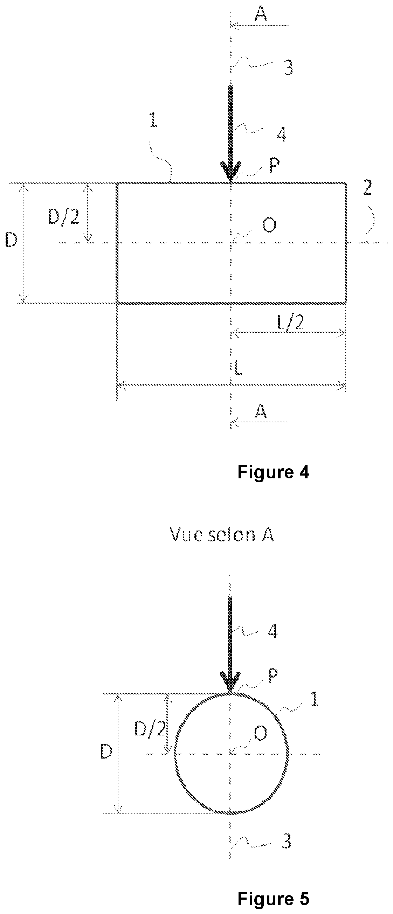

Des exemples et modes d'exécution de jupes pour former des tubes selon la présente invention et tels que décrits dans la présente demande sont illustrés dans les figures 1 et 2a à 2d qui sont des vues selon des coupes perpendiculaires à l'axe longitudinal (comme dans la figure 4).

Dans la figure 1, un premier mode d'exécution de jupe cylindrique 1 comprend donc la couche principale 9 recouverte par le film 10, les extrémités 11a/11b du film 10 étant disposées bout-à-bout.

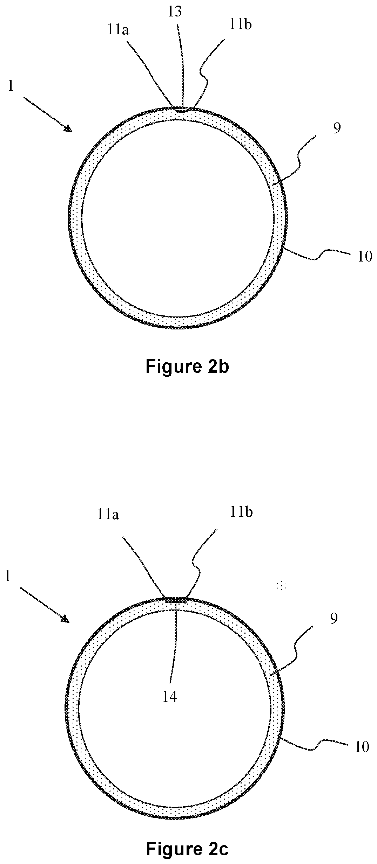

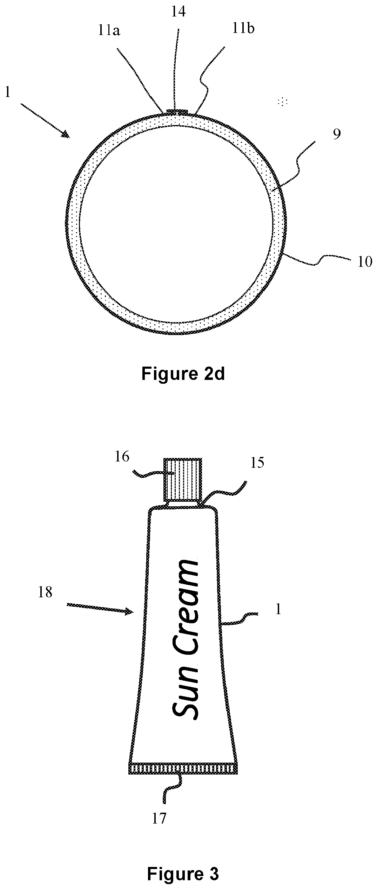

Les figures 2a, 2b, 2c et 2d décrivent d'autres modes d'exécution de jupes selon l'invention. Par exemple, la figure 2a illustre un mode d'exécution dans lequel les extrémités 11a/11b du film 10 ne sont pas disposées bout-à-bout de sorte qu'un espace 12 est présent entre lesdites extrémités du film 11a et 11b.

La figure 2b illustre un mode d'exécution dans lequel il y a une superposition 13 des extrémités 11a et 11b du film 10. Préférentiellement les extrémités sont soudées ou collées l'une sur l'autre dans ce mode d'exécution.

La figure 2c illustre un mode d'exécution dans lequel une bande de renfort 14 est ajoutée entre la couche principale 9 et le film 10. De préférence, la face inférieure de la bande de renfort 14 est soudée lors de l'extrusion de la couche principale 9. De préférence également, la face supérieure de la bande de renfort 14 est soudée ou collée sur les extrémités11a et 11b du film.

La figure 2c illustre un autre mode d'exécution utilisant une bande de renfort 14 mais dans ce cas la bande 14 est placée sur l'extérieur du film 10. De préférence également, la face inférieure de la bande de renfort 14 est soudée ou collée sur les extrémités11a et 11b du film.

Bien entendu, ce sont des exemples de réalisation et d'autres variantes et configurations équivalentes sont possibles. Par exemple, l'utilisation de la bande de renfort peut se faire sur tous les modes d'exécution de jupes décrits et illustrés.

De préférence la bande de renfort 14 présente une structure similaire à celle du film 10 afin d'assurer la continuité des propriétés mécaniques et barrières.

Sa structure est adaptée au besoin de soudage ou collage sur chacune de ses faces. Son épaisseur est faible, de préférence du même ordre que l'épaisseur du film 10.

Par exemple, son épaisseur est entre 10 et 120 microns et de préférence entre 30 et 80 microns.

Comme exemples de matière pour la structure de la bande de renfort, on peut envisager: PE/PET/PE ou PE/PET/PE-EVOH-PE. D'autres matières équivalentes sont bien entendu possibles.

Un exemple de tube 18 selon la présente invention est illustré de manière schématique dans la figure 3. Le tube 18, par exemple d'emballage, comprend la jupe 1 selon la présente invention, une épaule 15 de tube avec goulot, un bouchon et une soudure d'extrémité 17 pour fermer le tube 18.

Le tube 18 réalisé selon l'invention comporte également des propriétés d'élasticité inattendues. Pour les tubes d'emballages utilisés dans le domaine des produits cosmétiques en particulier une grande importance est accordée à l'aspect de l'emballage avant et pendant son usage. Sur ce marché, les consommateurs souhaitent notamment que le tube recouvre sa forme après vidage partiel ou total du produit. Cette élasticité de la jupe 1 qui provoque le retour du tube 18 à sa forme initiale suite à l'expulsion du produit, nécessite une force de retour élastique de la paroi du tube. Cette force doit être suffisante pour contrer les forces de viscosité du produit emballé qui s'opposent à l'entrée d'air à l'intérieur de l'emballage. Il est assez intuitif de comprendre que la viscosité du produit emballé qui obstrue l'orifice engendre une force s'opposant à l'entrée d'air à l'intérieur du tube. Il est donc important de pouvoir ajuster les propriétés de retour élastique du tube en fonction de la viscosité du produit emballé.

Les tubes extrudés selon l'état de l'art, présentent une résistance au stress cracking élevée nécessaire à la conservation des formules cosmétiques. Cependant, l'élasticité de ces tubes extrudés est parfois insuffisante pour des produits particulièrement visqueux. La méthode actuelle pour augmenter le retour élastique des tubes extrudés en polyéthylène consiste à augmenter l'épaisseur de la paroi du tube ou ajuster le mélange de polyéthylène. L'augmentation du taux de PEHD dans le mélange est habituellement utilisée pour augmenter la rigidité et par conséquent la force de rappel de la paroi du tube. Cependant, l'augmentation du taux de PEHD provoque conjointement la diminution de la résistance au stress cracking de l'emballage. L'augmentation de l'épaisseur de la paroi, n'est pas une solution non plus pour des raisons économiques et environnementales. Il a été trouvé que l'association d'une couche principale ayant un module en traction inférieur à 1200 N/mm2 et de préférence inférieur à 500 N/mm2 avec un film mono- ou multicouche ayant un module en traction supérieur à 3500 N/mm2 confère à la jupe une force de retour élastique inattendue.

Il n'existe pas de norme pour mesurer le comportement élastique des jupes de tube d'emballage. Habituellement, l'homme du métier évalue le caractère élastique des jupes de tube par comparaison « manuelle » en déformant à la main l'emballage et en observant son comportement. Cette méthode présente de nombreux inconvénients car elle ne permet pas de fournir des données chiffrées et reproductibles et varie en fonction de la perception de la personne qui fait le test. Afin de pallier cette difficulté, une méthode de mesure du comportement élastique pouvant être reproduite a été mise au point.

Le comportement élastique des jupes est mesuré selon la procédure décrite ci-dessous. Un échantillon de jupe cylindrique de rapport L/D=1.714 est prélevé pour la mesure ; L représentant la longueur de la jupe dans la direction axiale et D son diamètre externe.

La figure 4 représente un échantillon de jupe cylindrique 1 de diamètre D et de longueur L, l'axe 2 de l'échantillon cylindrique étant disposé horizontalement. Une déformation 4 de l'échantillon 1 est imposée au point P situé à demi-distance entre les extrémités de l'échantillon selon l'axe 2. Initialement le point P se situe à la distance D/2 de l'axe 2 mesurée selon l'axe 3. L'axe 3 est perpendiculaire à l'axe 2 et coupe l'axe 2 au point O.

La figure 5 illustre l'échantillon 1 selon la vue A perpendiculaire. La mesure du caractère élastique consiste à imposer une déformation de l'échantillon 1 au point P selon l'axe 3 grâce à l'élément de machine 4.

L'échantillon est déformé à la vitesse de 2mm/s selon le cycle suivant :
- Phase de chargement 5 : déformation de l'échantillon à 2mm/s jusqu'au point O. L'élément de machine 4 se déplace verticalement le long de l'axe 3 et entraine le point P de la jupe. La course du point P de la jupe est égale à D/2 à la fin de la phase de chargement.
- Phase de déchargement 6 : L'élément de machine 4 remonte le long de l'axe 3 jusqu'à la position initiale à la vitesse de 2mm/s.

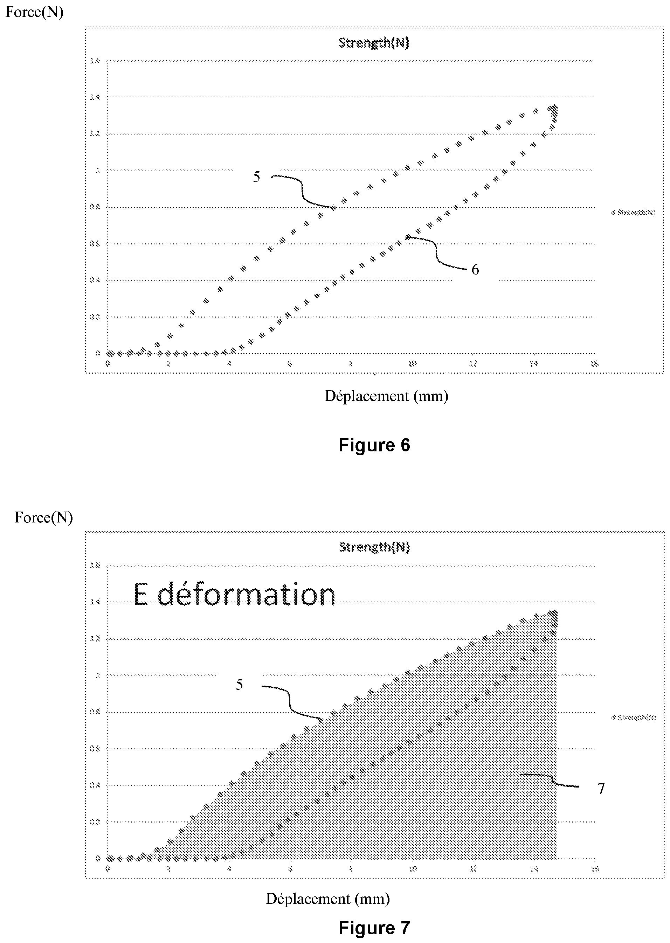

La force en fonction du déplacement du point P est enregistrée pendant le cycle et le type de graphique obtenu est illustré figure 6.

L'énergie nécessaire pour déformer l'échantillon 1 de la position initiale jusqu'au point O est calculée. L'énergie de déformation est illustrée figure 6 par l'aire 7 sous la courbe de chargement 5. L'énergie de déformation mesurée dépend principalement de la rigidité de la jupe. Plus la jupe est rigide, plus l'énergie de déformation mesurée est élevée. Une énergie de déformation importante peut être souhaitée lorsque des produits visqueux sont présents dans l'emballage.

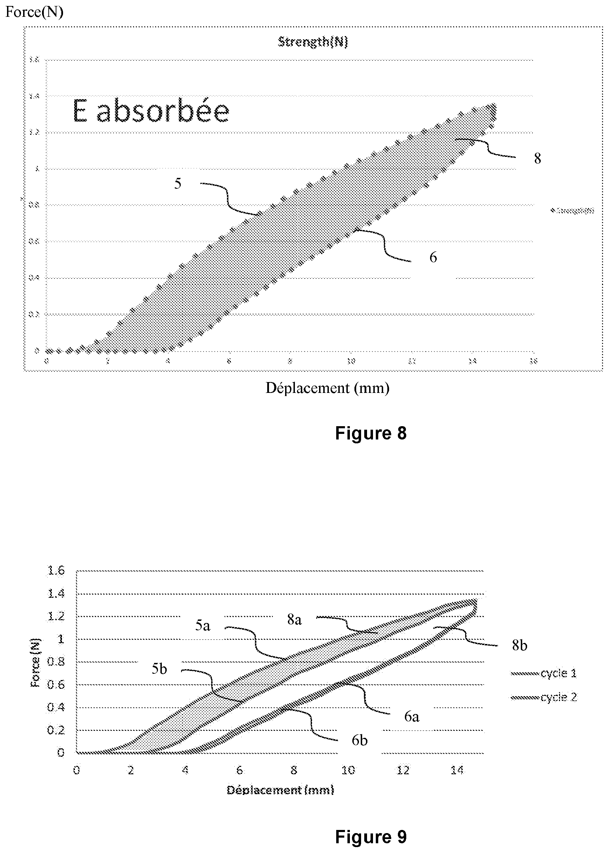

L'énergie absorbée 8 par l'échantillon 1 lors d'un cycle de charge 5 et décharge 6 est illustrée figure 8. L'énergie absorbée 8 correspond à la différence entre l'énergie de déformation 7 lors de la charge 5 et de l'énergie de retour élastique lors de la décharge 6. L'énergie absorbée 8 caractérise le comportement de l'échantillon 1.

L'élasticité de l'échantillon 1 est déterminée suite à l'enchainement consécutif de deux cycles de déformation tels que définis précédemment. Le deuxième cycle de déformation est enchainé sans interruption, dès que l'élément machine 4 est revenu à la position de départ. Un exemple du résultat obtenu suite à deux cycles de déformation de l'échantillon 1 est illustré figure 9. L'énergie absorbée 8a au cours du premier cycle correspond à l'aire comprise entre les courbes de charge 5a et décharge 6a. De même, l'énergie absorbée 8b au cours du second cycle correspond à l'aire comprise entre les courbes de charge 5b et décharge 6b. On observe que l'énergie absorbée 8b au cours du second cycle est plus faible que l'énergie absorbée 8a au cours du premier cycle car l'échantillon 1 n'est pas revenu à la position initiale entre les deux cycles. Ce résultat indique que l'échantillon n'a pas retrouvé la forme initiale entre les deux cycles de déformation consécutifs.

Le comportement élastique de l'échantillon 1 est caractérisé par le rapport de l'énergie absorbée 8b au cours du cycle 2 sur l'énergie absorbée 8a au cours du cycle 1. Plus le rapport d'énergie absorbée tend vers 1, plus le comportement est élastique, ce qui indique que la jupe de tube retrouve sa géométrie initiale après déformation. Inversement, si le rapport d'énergie absorbée tend vers 0, cela indique que la jupe de tube est peu élastique et que par conséquent l'emballage reste déformé et ne recouvre pas sa forme initiale.

L'invention permet d'obtenir des jupes de tube extrudées ayant un comportement élastique inattendu. Les emballages fabriqués avec ces jupes conservent leur forme pendant toute la durée d'utilisation et quel que soit la quantité de produit restant à l'intérieur de l'emballage. Il est d'un grand avantage d'utiliser ces emballages pour les produits cosmétiques notamment. Le comportement inattendu est illustré par les exemples ci-dessous.

### Exemple 1 (tube selon état de l'art actuel):

Une jupe de diamètre 35mm et d'épaisseur 480 microns est obtenue par extrusion d'un mélange de 45% HDPE Hostalen GF 4750 avec 45% de LDPE ExxonMobil 165 et 10% LLDPE Dowlex 2045 G. Un échantillon de cette jupe est prélevée et mesurée selon la méthode exposée précédemment. Pour une jupe de diamètre D=35mm, la longueur de l'échantillon mesuré est égale à 60 mm (L=60mm). Le rapport L/D de l'échantillon est égal à 1,714. Le rapport d'énergie absorbée de cette jupe qui illustre le comportement élastique est égal à 67% et l'énergie de déformation de la jupe qui illustre la rigidité est égale à 63 N.mm.

### Exemple 2 :

Une jupe 1 de diamètre 35mm et d'épaisseur 480 microns est produite selon l'invention. La couche principale 9 d'épaisseur 430 microns est composée de 100% de LDPE ExxonMobil 165. La couche principale représente 89,5% de l'épaisseur de la jupe. La couche interne du film 10 d'épaisseur 26 microns est composée d'un LDPE. La couche externe du film 10 est un PET bi-orienté métallisé d'épaisseur 24 microns. La surface externe de la couche externe qui forme aussi la face externe de la jupe 1 est décorée. Un échantillon de jupe de longueur 60mm est prélevé. Le rapport L/D de l'échantillon est égal à 1,714. Le rapport d'énergie absorbée de cette jupe qui illustre le comportement élastique est égal à 80% et l'énergie de déformation de la jupe qui illustre la rigidité est égale à 61 N.mm.

La jupe 1 obtenue selon l'invention (exemple 2) présente une élasticité supérieure à la jupe obtenue selon l'état de l'art (exemple 1). L'invention permet d'obtenir une élasticité améliorée pour des jupes de même épaisseur et de même rigidité.

Les modes d'exécution décrits dans la présente demande le sont à titre d'exemples illustratifs et ne doivent pas être considérés comme limitatifs. D'autres modes d'exécution peuvent faire appel à des moyens ou matières équivalents à ceux décrits par exemple. Les modes d'exécution peuvent également être combinés entre eux en fonction des circonstances, ou des moyens utilisés dans un mode peuvent être utilisés dans un autre mode. Les dimensions sont également données à titre d'exemples ou de valeurs préférées et peuvent varier en fonction des circonstances. De même, les matières indiquées le sont à titre d'exemples illustratifs et d'autre matières équivalentes ou appropriées sont envisageables.

Dans la présente description, il est principalement fait référence à des jupes utilisées pour former des tubes 18 mais d'autres applications sont bien entendu possibles dans le cadre de la présente invention.

## Revendications

1. Jupe (1) multicouche de tube flexible comprenant une couche principale (9) extrudée et un film mono- ou multicouche (10) entourant au moins partiellement la couche principale ; **caractérisée par le fait que** le module en traction de la couche principale (9) est inférieur à 1200 N/mm² et que le module en traction du film (10) est supérieur à 3500 N/mm².

2. Jupe selon la revendication 1 dans laquelle le module en traction de la couche principale (9) est inférieur à 500 N/mm².

3. Jupe selon la revendication 1 ou 2 dans laquelle le film (10) comprend deux couches dont l'une au moins présente un module en traction supérieur à 3500 N/mm².

4. Jupe selon la revendication 3 dans laquelle l'autre desdites deux couches du film (10) présente un module en traction supérieur à 100 N/mm².

5. Jupe selon l'une quelconque des revendications précédentes dans laquelle l'épaisseur de la couche principale (9) représente entre 80 et 97 % de l'épaisseur de la jupe (1).

6. Jupe selon l'une quelconque des revendications précédentes dans laquelle l'épaisseur de la couche principale (9) est comprise entre 190 et 680 microns.

7. Jupe selon l'une quelconque des revendications précédentes dans laquelle l'épaisseur de la jupe (1) est comprise entre 200 et 700 microns et de préférence entre 300 et 600 microns.

8. Jupe selon l'une quelconque des revendications précédentes **caractérisée par le fait que** le retour élastique de la jupe se **caractérise par** un rapport d'énergie absorbée suite à deux cycles de déformations consécutifs selon la méthode décrite dans la description supérieur à 60% et de préférence supérieur 80 %.

9. Jupe selon l'une des revendications précédentes, dans laquelle les extrémités (11a/11b) du film (10) sont placées bout-à-bout ou ont un espace (12) entre elles, ou sont placées afin de former un recouvrement (13).

10. Jupe selon l'une des revendications précédentes 1 à 9, dans laquelle une bande (14) est fixée sur les extrémités (11a, 11b) du film.

11. Jupe selon la revendication précédente, dans laquelle la bande (14) est placée entre la couche principale (9) et le film (10) ou sur le film (10).

12. Jupe selon l'une des revendications précédentes, dans laquelle la couche principale (9) est multicouche et coextrudée.

13. Jupe selon l'une des revendications précédentes, dans laquelle la couche principale (9) comprend une couche barrière à l'oxygène et/ou une couche de matière recyclée

14. Jupe selon la revendication précédente, dans laquelle la couche barrière est une couche comprenant une résine EVOH.

15. Jupe selon l'une des revendications précédentes, dans laquelle le film (10) comprend une structure multicouche.

16. Jupe selon l'une des revendications précédentes, dans laquelle le film (10) comprend une couche barrière à l'oxygène.

17. Jupe selon la revendication précédente, dans laquelle la couche barrière est une couche de résine EVOH et/ou une couche métallisée et/ou une couche d'aluminium.

18. Produit comprenant au moins une jupe telle que définie dans l'une des revendications précédentes.

## Patentansprüche

1. Mehrschichtmantel (1) für flexible Tube umfassend eine extrudierte Hauptschicht (9) und einen Einzel- oder Mehrschichtfilm (10), der die Hauptschicht wenigstens teilweise umgibt; **dadurch gekennzeichnet, dass** der Zugmodul der Hauptschicht (9) kleiner als 1200 N/mm² ist und dass der Zugmodul des Films (10) größer als 3500 N/mm² ist.

2. Mantel nach Anspruch 1, wobei der Zugmodul der Hauptschicht (9) kleiner als 500 N/mm² ist.

3. Mantel nach Anspruch 1 oder 2, wobei der Film (10) zwei Schichten umfasst, wovon wenigstens eine ein Zugmodul größer als 3500 N/mm² aufweist.

4. Mantel nach Anspruch 3, wobei die andere der zwei Schichten des Films (10) ein Zugmodul größer als 100 N/mm² aufweist.

5. Mantel nach einem der vorhergehenden Ansprüche, wobei die Dicke der Hauptschicht (9) zwischen 80 und 97 % der Dicke des Mantels (1) repräsentiert.

6. Mantel nach einem der vorhergehenden Ansprüche, wobei die Dicke der Hauptschicht (9) zwischen 190 und 680 Mikrometer beträgt.

7. Mantel nach einem der vorhergehenden Ansprüche, wobei die Dicke des Mantels (1) zwischen 200 und 700 Mikrometer und vorzugsweise zwischen 300 und 600 Mikrometer beträgt.

8. Mantel nach einem der vorhergehenden Ansprüche, **dadurch gekennzeichnet, dass** sich die elastische Rückstellung des Mantels durch ein Verhältnis absorbierter Energie nach zwei aufeinanderfolgenden Verformungszyklen nach dem in der Beschreibung beschriebenen Verfahren, das größer als 60 % und vorzugsweise größer als 80 % ist, auszeichnet.

9. Mantel nach einem der vorhergehenden Ansprüche, wobei die Enden (11a / 11b) des Films (10) Ende an Ende platziert sind oder einen Raum (12) zwischen ihnen aufweisen, oder so platziert sind, dass sie eine Überlappung (13) bilden.

10. Mantel nach einem der vorhergehenden Ansprüche 1 bis 9, wobei ein Streifen (14) auf den Enden (11a, 11b) des Films befestigt ist.

11. Mantel nach dem vorhergehenden Anspruch, wobei der Streifen (14) zwischen der Hauptschicht (9) und dem Film (10) oder auf dem Film (10) platziert ist.

12. Mantel nach einem der vorhergehenden Ansprüche, wobei die Hauptschicht (9) mehrschichtig und coextrudiert ist.

13. Mantel nach einem der vorhergehenden Ansprüche, wobei die Hauptschicht (9) eine Sauerstoffsperrschicht und/oder eine Schicht aus recyceltem Material umfasst

14. Mantel nach dem vorhergehenden Anspruch, wobei die Sperrschicht eine Schicht ist, die ein EVOH-Harz umfasst.

15. Mantel nach einem der vorhergehenden Ansprüche, wobei der Film (10) eine Mehrschichtstruktur umfasst.

16. Mantel nach einem der vorhergehenden Ansprüche, wobei der Film (10) eine Sauerstoffsperrschicht umfasst.

17. Mantel nach dem vorhergehenden Anspruch, wobei die Sperrschicht eine Schicht aus EVOH-Harz und/oder eine metallisierte Schicht und/oder eine Aluminiumschicht ist.

18. Produkt umfassend wenigstens einen Mantel nach einem der vorhergehenden Ansprüche.

## Claims

1. Multilayer flexible-tube skirt (1) comprising an extruded main layer (9) and a mono- or multilayer film (10) at least partially surrounding the main layer; **characterized in that** the tensile modulus of the main layer (9) is less than 1200 N/mm² and **in that** the tensile modulus of the film (10) is greater than 3500 N/mm².

2. Skirt according to Claim 1, wherein the tensile modulus of the main layer (9) is less than 500 N/mm².

3. Skirt according to Claim 1 or 2, wherein the film (10) comprises two layers, at least one of which has a tensile modulus greater than 3500 N/mm².

4. Skirt according to Claim 3, wherein the other of said tow layers of the film (10) has a tensile modulus greater than 100 N/mm².

5. Skirt according to any one of the preceding claims, wherein the thickness of the main layer (9) represents between 80 and 97% of the thickness of the skirt (1).

6. Skirt according to any one of the preceding claims, wherein the thickness of the main layer (9) is between 190 and 680 micrometres.

7. Skirt according to any one of the preceding claims, wherein the thickness of the skirt (1) is between 200 and 700 micrometres and preferably between 300 and 600 micrometres.

8. Skirt according to any one of the preceding claims, **characterized in that** the elastic return of the skirt is **characterized by** an absorbed energy ratio, following two consecutive deformation cycles according to the method described in the description, greater than 60% and preferably greater than 80%.

9. Skirt according to one of the preceding claims, wherein the ends (11a/11b) of the film (10) are placed end-to-end or exhibit a space (12) between one another, or are placed so as to form an overlap (13).

10. Skirt according to one of the preceding Claims 1 to 9, wherein a strip (14) is fastened to the ends (11a, 11b) of the film.

11. Skirt according to the preceding claim, wherein the strip (14) is placed between the main layer (9) and the film (10) or on the film (10).

12. Skirt according to one of the preceding claims, wherein the main layer (9) is multilayer and coextruded.

13. Skirt according to one of the preceding claims, wherein the main layer (9) comprises an oxygen barrier layer and/or a layer of recycled material.

14. Skirt according to the preceding claim, wherein the barrier layer is a layer comprising an EVOH resin.

15. Skirt according to one of the preceding claims, wherein the film (10) comprises a multilayer structure.

16. Skirt according to one of the preceding claims, wherein the film (10) comprises an oxygen barrier layer.

17. Skirt according to the preceding claim, wherein the barrier layer is a layer of EVOH resin and/or a metallized layer and/or a layer of aluminium.

18. Product comprising at least one skirt as defined in one of the preceding claims.
